Europäisches Patentamt

European Patent Office

Office européen des brevets

(19)

(11) Publication number: 0 069 479
A1

(12) # EUROPEAN PATENT APPLICATION

(21) Application number: 82303045.7

(22) Date of filing: 11.06.82

(51) Int. Cl.³: C 08 L 23/02
C 08 L 23/16

(30) Priority: 15.06.81 JP 90818/81

(43) Date of publication of application:
12.01.83 Bulletin 83/2

(84) Designated Contracting States:
DE FR GB IT NL

(71) Applicant: TOA NENRYO KOGYO K.K.
1-1 Hitotsubashi, 1-Chome Chiyoda-Ku
Tokyo(JP)

(72) Inventor: Yamamoto, Noboru
52-13-101, Hayamiya 1-chome
Nerima-ku Tokyo(JP)

(72) Inventor: Norikubo, Keiichi
1902-5, Ooaza Kamekubo Ooi-machi
Iruma-gun Saitama-ken(JP)

(72) Inventor: Shimada, Masakichi
1902-5, Ooza Kamekubo Ooi-machi
Iruma-gun Saitama-ken(JP)

(72) Inventor: Kanai, Tsuyoshi
2253-61, Kamariya-cho Kanazawa-ku
Yokohami-shi Kanagawa-ken(JP)

(72) Inventor: Sei, Kazuo
3404-11, Hino-cho Kounan-ku
Yokohama-shi Kanagawa-ken(JP)

(74) Representative: Northover, Robert Frank et al,
ESSO CHEMICAL LIMITED ESSO RESEARCH CENTRE
P.O. Box 1
Abingdon Oxfordshire, OX13 6BB(GB)

(54) Thermoplastic resin composition.

(57) A thermoplastic resin composition comprising a crystalline polyolefin such as an ethylene-propylene block copolymer, an ethylene-alpha-propylene rubber, such as EPR or EPDM, and particulate inorganic filler such as talc, mica or cystalline calcium silicate has improved properties, particularly the property of low temperature impact strength, without loss of mechanical strength.

EP 0 069 479 A1

## THERMOPLASTIC RESIN COMPOSITION

The present invention relates to a thermoplastic resin composition which exhibits improved properties, including low-temperature impact resistance, moldability, and paintability.

More particularly, the present invention relates to a thermoplastic resin composition comprising crystalline polyolefin, ethylene-alpha-olefin copolymer rubber, and particulate inorganic filler.

Heretofore, crystalline polypropylene has been used in a variety of applications because of its outstanding chemical resistance and mechanical properties. For application areas where high impact resistance is required, crystalline ethylene-propylene block copolymer has been used. This block copolymer has improved impact resistance at normal temperature, but its low-temperature impact resistance has limited the scope of its use. Moreover, its inherent physical properties are not particularly suited for certain finishing techniques such as painting, plating, and adhesion, and dimensional accuracy in molding. Other resins, such as polyurethane resins formed by reactive injection molding have been substituted for polypropylene resins in certain applications because of their improved properties, particularly their low temperature impact resistance. This substitute, however, is expensive and unreclaimable and requires a longer molding cycle time. Polypropylene blends which can be processed by standard injection molding in order to improve the low-temperature impact resistance of crystalline ethylene-propylene block copolymers have been proposed.

These blends exhibit improved low-temperature impact resistance, but not to the degree necessary to compete with polyurethane resin.

The purpose of the present invention is to provide a thermoplastic resin composition having improved properties, particularly low temperature impact strength.

Surprisingly, it has been found that certain crystalline polyolefins can be improved by incorporating therein a polyolefin with ethylene-alpha-olefin copolymer rubber, and an effective amount of a particulate or fibrous material (such as talc, mica, or fibrous crystalline calcium silicate) having a high aspect ratio at specific ratios. Specifically, the incorporation of the copolymer rubber and particulate or fibrous material improves the copolymer's low temperature impact resistance, finishing and moldability properties without sacrificing mechanical properties. Other properties improved include dimensional stability in molding, paintability, reduced warpage, and improved weld strength.

The composition of this invention comprises (1) from 20 to 79 Wt. % of crystalline polyolefin preferably having a melt flow index of 0.5 to 20 g/10 minutes, (2) from 20 to 50 Wt.% of ethylene-alpha-olefin copolymer rubber, and (3) from 1 to 30 Wt.% of a particulate inorganic filler material such as talc (perferably having an average particle diameter of 0.5 to 15 microns), mica (preferably having an average particle diameter of 1 to 200 microns), of fibrous crystalline calcium silicate (preferably having an average particle diameter of 1 to 100 microns), the filler material being present in an amount sufficient to prevent significant decrease in rigidity due to the presence of the copolymer rubber.

The polyolefin used in this invention may include high pressure, low density polyethylene (LDPE), low pressure linear low density polyethylene (L-LDPE), medium-low-pressure high-density polyethylene (HDPE), crystalline polypropylene, crystalline ethylene-propylene block or random copolymer containing 20 Wt.% of ethylene, polybutene-1, ethylene-1-butene copolymer, or ethylene-vinyl acetate copolymer containing less than 20 WT.% of vinyl acetate, or a mixture thereof, and similar type polyolefins. The preferred polyolefin is a crystalline ethylene-propylene copolymer, more preferably a block copolymer containing less than 20 Wt.% of ethylene, most preferably less than 10 Wt.% ethylene.

The polyolefin component preferably has a melt flow index (MI) of 0.5 to 20 g/10 minutes. It is present in the composition in an amount between 20 and 79 Wt.%. If the amount of the polyolefin is less than 20 Wt. %, the resulting composition decreases in softening point which results in poor moldability due to sticking to the mold. On the other hand, if more than 79 Wt.% of the polyolefin is present, the resulting composition does not exhibit improved low temperature impact resistance. Preferably the ethylene – propylene block copolymer is present in an amount of from 40 to 60 Wt.%.

The ethylene-alpha-olefin copolymer rubber is exemplified by copolymer rubbers of ethylene and alpha-olefin such as propylene, butene-1, and hexene-1; and terpolymer rubbers (EPDM) of ethylene-proylene and non-conjugated diene, as the third component, such as ethylidene-norbornene and dicyclopentadiene. Preferred copolymer rubbers include ethylene-propylene copolymer rubber (EPR) and EPDM. These ethylene-alphaolefin copolymer rubbers typically contain from about 20 to about 90 Wt.% of ethylene and have a Mooney viscosity (JIS K-6300 ML 1+4 100°C) of 10 to 120, and are contained in an amount of 20 to 50 Wt.% in the composition of this invention. If the content is less than 20 Wt.% the low temperature impact resistance and finishing properties of the resulting composition are not significantly improved. On the other hand, if the content is more than 50 Wt.%, the resulting composition exhibits poor moldability properties due to its lowered softening point. The final product also exhibits poor rigidity. Preferably from 20 to 40 Wt.% of copolymer rubber is present.

The particulate inorganic filler used for the composition of this invention includes talc having an average particle diameter of 0.5 to 15 microns, mica having an average particle diameter of 1 to 200 microns, or fibrous crystalline calcium silicate having an average particle diameter of 1 to 100 microns. Preferable among them are those which have a high aspect ratio. These fillers are effective to prevent the composition from decreasing in rigidity due to the addition of ethylene-alphaolefin copolymer. A filler having an aspect ratio higher than 3 is preferable. The talc, mica, or fibrous crystalline calcium silicate is contained in an amount of 1 to 30 Wt.% in the composition. If the content is less than 1 Wt.%, the composition produces products having poor rigidity, and if the content is more than 30 Wt.%, the resulting composition exhibits poor moldability. Preferably from 5 to 25 Wt.% of filler is present.

The composition of this invention can be obtained by mixing the components in the molten state with a high speed intensive mixer, banbury mixer, roll, single-screw extruder, twin-screw extruder, etc. During or prior to mixing, additives including stabilizers such as antioxidant and UV absorber, dispersion agent, slip agent, anti-static agent, pigment, etc. may be incorporated into the composition.

The thermoplastic resin composition of this invention can be formed into thermoplastic molded articles and is outstanding in moldability and demolding in injection molding. It can also be processed by extrusion molding and blow molding. The resulting molded products are superior in low temperature impact resistance, finishing properties (such as painting) dimensional stability, warpage and shrinkage, and weld strength. They can be used in various application areas, and are particularly useful for automobile bumpers.

The invention is illustrated by the following examples, in which % is Wt. %. The performance of the composition was determined by the following test methods:

(1)     MI:  ASTM D-1238

(2)     Flexural modulus:    ASTM D-790

(3)     Izod impact strength:  ASTM D-256
        Determined on a 3.2 mm thick specimen with a notch.

(4)     Molding shrinkage:
        Determined on a molded specimen measuring 350 x 100 x 3 mm,
        after conditioning in a constant temperature room at 20°C
        for 24 hours.

(5)     Coating peel strength:
        Determined on a molded specimen, measuring 70 x 120 x 3 mm,
        coated with a chlorinated polypropylene primer and urethane
        top paint with baking.  The film in 10 mm width was peeled
        off at 180° using an Instron type universal tester.

(6)     Warpage:
        Determined on a molded disc specimen, measuring 150 x 1.5 mm,
        with a direct center gate, which is placed on a flat plate
        after conditioning in a constant temperature room at 20°C
        and 65% RH for 24 hours.
        Warpage (%) = (H - 1.5)/150 x 100
        (where H is the height of warpage.)

(7)     Weld strength retention:
        Determined on a No. 1 dumbbell specimen conforming to
        ASTM D-638 which was molded using a mold for weld strength
        test piece.  The specimen was subjected to tensile test at
        a pulling rate of 50 mm/min. on an Instron type universal
        tester.  The weld strength retention was obtained from the
        yield strength.

Example 1

The compositions of this invention were prepared by mixing the following components using a high speed intensive mixer according to the formulations shown in Table 1.

Crystalline ethylene-propylene block copolymer:
        (Ethylene content:  7 Wt.% MI:  9.0 [for Experiment Nos. 1 to 3
        and 9 to 11], MI:  15.0 [for Experiment Nos. 4, 6 to 8])

Ethylene-propylene random copolymer:
        (Ethylene content: 2 Wt.%, MI:  9.0) EPR:
        (Ethylene content:  75 Wt.%, Mooney viscosity:  20 [for Experiment

Nos. 1 to 5, 9, 10], Ethylene content: 75, Mooney viscosity: 70 [for Experiment Nos. 4 to 7])

EPDM:

(Ethylene content: 50 Wt.%, Mooney viscosity: 105) HDPE:

(Density: 0.960, MI: 0.3) LDPE:

(Density: 0.912, MI: 9.0) Talc:

(Average particle.diameter: 25 microns)

The resulting mixture was then melted and kneaded by a twin screw kneader at a cylinder temperature of 200 to 250°C and finally pellet-ized.

The resulting pellets were injection molded into test specimens under the molding conditions of 230°C and 900 kg/cm2. The test specimens were measured for flexural modulus, izod impact strength, molding shrinkage, coating peel strength, warpage, and weld strength retention. The results obtained are shown in Table 1. (Experiment Nos. 1 to 8)

For purpose of comparison, a composition containing less than 20% of EPR, a composition containing no talc, and crystalline ethylene-propylene block copolymer alone were tested. The results are shown in Table 1. (Experiment Nos. 9 to 11)

Example 2

The compositions of this invention were prepared by mixing the fol-lowing components as in Example 1 according to the formulations shown in Table 2.

Crystalline ethylene-propylene block copolymer:

(Ethylene content: 7 Wt.%, MI: 9.0) EPR:

(Ethylene content: 75 Wt.%, Mooney viscosity: 20) HDPE:

(Density: 0.960, MI: 0.3)

Mica:

(Average particle diameter: 30 microns)

Table 1

| Experiment No. | 1 | 2 | 3 | 4 | 5 | 6 | 7 | 8 | 9* | 10* | 11* |
|---|---|---|---|---|---|---|---|---|---|---|---|
| Ethylene-propylene block copolymer (%) | 55 | 50 | 40 | 60 | – | 50 | 50 | 60 | 60 | 60 | 100 |
| Ethylene-propylene random copolymer (%) | – | – | – | – | 60 | – | – | – | – | – | – |
| HDPE (%) | – | – | – | – | – | 10 | – | – | – | 20 | – |
| LDPE (%) | – | – | – | – | – | – | 10 | – | – | – | – |
| EPR (%) | 25 | 30 | 40 | 30 | 30 | 30 | 30 | – | 10 | 20 | – |
| EPDM (%) | – | – | – | – | – | – | – | 30 | – | – | – |
| Talc (%) | 20 | 20 | 20 | 10 | 10 | 10 | 10 | 10 | 30 | – | – |
| Flexural modulus (x 1000 kg/cm$^2$) | 13 | 12.5 | 11 | 9 | 9.5 | 9.5 | 8.5 | 9 | 19.5 | 7.5 | 11 |
| Izod impact strength at 20°C | 69 | 78 | 85 | 80 | 70 | 75 | 70 | 85 | 12 | 70 | 7 |
| (kg-cm/cm) at –30°C | 35 | 40 | 65 | 65 | 40 | 60 | 45 | 70 | 3 | 25 | 4 |
| Molding shrinkage (%) | 0.5 | 0.6 | 0.5 | 0.7 | 0.7 | 0.7 | 0.7 | 0.7 | 0.8 | 1.8 | 1.8 |
| Coating peel strength (g/10 gm) | 1100 | 1300 | 1600 | 1300 | 1200 | 1300 | 1200 | 1300 | 600 | 650 | 300 |
| Warpage (%) | 5.5 | 5.0 | 5.0 | 5.0 | 5.0 | 5.0 | 5.0 | 5.0 | 6.0 | 7.0 | 7.0 |
| Weld strength retention (%) | 40 | 50 | 50 | 50 | 50 | 50 | 50 | 50 | 40 | 80 | 90 |

\* Comparative Example

The resulting compositions were molded into test specimens and their physical properties were measured as in Example 1. The results obtained are shown in Table 2. (Experiment Nos. 12 to 14)

For the purpose of comparison, compositions containing less than 20% of EPR and a composition containing no mica were tested. The results are shown in Table 2. (Experiment Nos. 15 to 17)

Table 2

| Experiment No. | 12 | 13 | 14 | 15* | 16* | 17* |
|---|---|---|---|---|---|---|
| Ethylene-propylene block copolymer (%) | 60 | 50 | 40 | 60 | 70 | 60 |
| EPR (%) | 20 | 30 | 40 | 10 | 10 | 10 |
| HDPE (%) | -- | -- | -- | -- | -- | 30 |
| Mica (%) | 20 | 20 | 20 | 30 | 20 | -- |
| Flexural modulus ($\times$ 1000 kg/cm$^2$) | 15.5 | 13 | 12 | 20.5 | 18.2 | 9.1 |
| Izod impact strength (kg-cm/cm) at 20°C | 52 | 75 | 85 | 15 | 15 | 65 |
| at -30°C | 10 | 37 | 68 | 3 | 3 | 7.5 |
| Molding shrinkage (%) | 0.6 | 0.5 | 0.4 | 0.4 | 0.4 | 2.5 |
| Coating peel strength (g/10 cm) | 1000 | 1200 | 1600 | 600 | 600 | 550 |
| Warpage (%) | 2.0 | 1.5 | 1.0 | 1.5 | 2.5 | 9 |
| Weld strength retention (%) | 50 | 50 | 50 | 40 | 50 | 80 |

* Comparative examples

Example 3

The same compositions as in Example 2 were prepared in the same manner as in Example 2, except that the mica was replaced by fibrous crystalline calcium silicate (trade name Wollastonite) having an average particle diameter of 9 microns.

The resulting compositions were molded into test specimens and their physical properties were measured as in Example 1. The results obtained are shown in Table 3. (Experiment Nos. 18 to 20)

For the purpose of comparison, a composition containing less than 20% of EPR was tested. The results are shown in Table 3. (Experiment No. 21)

Table 3

| Experiment No. | 18 | 19 | 20 | 21* |
|---|---|---|---|---|
| Ethylene-propylene block copolymer (%) | 60 | 50 | 40 | 60 |
| EPR (%) | 20 | 30 | 40 | 10 |
| Wollastonite (%) | 20 | 20 | 20 | 30 |
| Flexural modulus (x 1000 kg/cm$^2$) | 14.5 | 11 | 11 | 19.5 |
| Izod impact strength at 20°C | 55 | 80 | 85 | 14 |
| (kg-cm/cm) at –30°C | 13 | 43 | 70 | 4 |
| Molding shrinkage (%) | 0.9 | 0.8 | 0.7 | 0.9 |
| Coating peel strength (g/10 cm) | 800 | 1300 | 1600 | 600 |
| Warpage (%) | 4.0 | 4.0 | 4.0 | 4.0 |
| Weld strength retention (%) | 80 | 80 | 80 | 70 |

* Comparative example

A property data in Tables 1, 2, and 3 reveals that in all experiments the low temperature impact strengths of the compositions of the present invention were markedly superior to those of the other compositions (Experiments 9-11, 15-17, and 21). The same is true for the coating peel strength of the compositions. Moreover, the molding shrinkage and warpage of the improved compositions were at least as good, with two exceptions (Experiments 15 and 16), as the comparison composition, and in most cases, were better.

In summary, the composition of the present invention comprising a crystalline polyolefin, an ethylene-alpha-olefin copolymer rubber and inorganic filler material produces a product having superior properties than prior crystalline polyolefins.

Y

CLAIMS

1.   A thermoplastic composition characterized in that it comprises:

    (a)    from 20 to 70 Wt.% of a crystalline polyolefin;

    (b)    from 20 to 50 Wt.% of an ethylene-alpha-olefin copolymer
rubber; and
    (c)    from 1 to 30 Wt.% of a particulate inorangic filler material,
said filler material being present in the composition in an amount sufficient to prevent substantial decrease in rigidity due to the presence
of said copolymer rubber.

2.   A thermoplastic resin composition according to claim 1, in which
the crystalline polyolefin has a melt flow index of from 0.5 to 20 g/10 min.

3.   A thermoplastic resin compostion according to claim 1 or claim 2,
in which the crystalline polyolefin is a crystalline ethylene-propylene
copolymer.

4.   A thermoplastic resin composition according to claim 3, in which the
ethylene-propylene copolymer is a block copolymer wherein the ethylene
content is less than 10 Wt.%

5.   A thermoplastic resin composition according to claim 4, in which
the ethylene-propylene block copolymer is present in an amount from 40
to 60 Wt.%

6.   A thermoplastic resin composition according to any of claims 1 to
5, in which the copolymer rubber is EPR.

7.   A thermoplastic resin according to any of claims 1 to 5, in which
the copolymer rubber is EPDM.

8.   A thermoplastic resin according to any of claims 1 to 7, in which
copolymer rubber is present in an amount of from 20 to 40 Wt.%

9.   A thermoplastic resin composition according to any of claims 1 to 8, in which the particulate inorganic filler material is one or more of talc, mica and fibrous crystalline calcium silicate.

10.   A thermoplastic resin composition according to claim 9, in which the talc has an average particle size diameter of 0.5 to 15 microns, the mica has an average particle size diameter of 1 to 200 microns, and the fibrous crystalline calcium silicate material has an average particle size diameter of 1 to 100 microns.

11.   A thermoplastic molded article characterized in that it comprises:

(a)   from 40 to 60 Wt.% of an ethylene-propylene block copolymer having an ethylene content of 10 Wt.% or less and a melt index of from 0.5 to 20 g/10 min.;

(b)   from 20 to 40 Wt.% of an ethylene-alpha-olefin copolymer rubber selected from EPR and EPDM containing from 20 to 90 Wt.% of ethylene: and

(c)   from 5 to 25 Wt.% of an inorganic filler material selected from talc, mica, and fibrous crystalline calcium silicate.

European Patent
Office

**EUROPEAN SEARCH REPORT**

Application number

EP 82 30 3045

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | EP-A-0 007 639 (BETHLEHEM STEEL) *Claims 1,9,12,23; page 2, lines 9-27; page 4, lines 18-34* | 1-3,6-11 | C 08 L 23/02 C 08 L 23/16 |
| X | US-A-3 700 614 (W.F.SCHENKENBERG) *Claim 1; column 2, lines 24-60* | 1-3,6-9 | |
| A | EP-A-0 000 783 (BASF) *Claim* | 1-2,9-11 | |
| A | EP-A-0 009 276 (STAMCARBON) *Abstract* | 1-11 | |

TECHNICAL FIELDS
SEARCHED (Int. Cl. ³)

C 08 L

The present search report has been drawn up for all claims

| Place of search THE HAGUE | Date of completion of the search 05-10-1982 | Examiner GOOVAERTS R.E. |
|---|---|---|